# EUROPEAN PATENT APPLICATION

(11) **EP 1 499 106 A1**
(43) Date of publication of application: **19.01.2005**
(21) Application number: 02772865.8
(22) Date of filing: 19.09.2002
(51) Int. Cl.: H04N 1/41, H04N 7/28

(54) **IMAGE DATA COMPRESSION DEVICE, IMAGE DATA COMPRESSION METHOD, RECORDING MEDIUM, AND PROGRAM**

(30) Priority: 22.03.2002 JP 2002080781
(71) Applicant: Sipec Corporation, Tokyo 113-0033 (JP); Ohmi, Tadahiro, Sendai-shi, Miyagi 980-0813 (JP)
(72) Inventor: Ohmi, Tadahiro, Aoba-ku, Sendai-shi, Miyagi 980-0813 (JP); Yokoyama, Yukihiko, Bunkyo-ku, Tokyo 113-0033 (JP); Konda, Masahiro, Bunkyo-ku, Tokyo 113-0033 (JP); Nakayama, Takahiro, Aoba-ku, Sendai-shi, Miyagi 980-8579 (JP)
(74) Representative: VOSSIUS & PARTNER
(86) International application number: PCT/JP2002/009625
(87) International publication number: WO 2003/081898

(57) **Abstract**

Input image data inputted in an image block of m pixels × n pixels is changed in the size of the image block; image data of the image block changed in size is subjected to compression processing; compressed image data obtained by the compression processing is subjected to expansion processing to generate restored image data in the m-pixel × n-pixel image block; and whether or not the size of the image block is further changed is judged based on the strength of the correlation between the restored image data and the input image data. The compression processing is performed on the image data while change in size of the image block is repeated until the correlation between the restored image data and the input image data is strong, thereby making it possible to perform compression processing on the image data of the input image at a high compression ratio while maintaining the image quality of the restored image.

## Description

### Technical Field

The present invention relates to an image data compression apparatus, an image data compression method, a recording medium, and a program and, more specifically, is preferably used in an image data compression apparatus which changes the block size of image data inputted in blocks of a predetermined size and performs compression processing on the image data.

### Background Art

Conventionally, when image information of an input image constituted of a plurality of pixels is recorded on a recording medium or transmitted via a transmitting medium, coding processing is performed on image data of the input image to thereby compress the image data, and the resultant image data is recorded on the recording medium or transmitted via the transmitting medium.

In the coding processing for the image data of the input image, the input image constituted of a plurality of pixels is first divided into macroblocks (image blocks) of a predetermined size (for example, 8 × 8 pixels). Then, predetermined calculation processing is performed on each of the divided macroblocks to thereby eliminate high frequency components of a pixel value in the macroblock, and the image data of the input image is compressed (coded).

For example, when the input image is a color image, an original signal of the input image or a luminance signal and a color differential signal generated by performing predetermined color correction processing on the original signal of the input image are generally inputted. Here, the inputted original signal or luminance signal and color differential signal are information retained by each of the pixels constituting the color image. When the image data of the color image is compressed, the color image is divided into macroblocks of a predetermined size, and the inputted original signal or the luminance signal and color differential signal are calculated for each macroblock to compress the image data of the color image.

However, since the high frequency components of the image data are eliminated when the image data of the input image is subjected to coding processing to be compressed as described above, an image restored from the compressed data (restored image) with respect to the input image deteriorates in image quality more greatly in an image with large change in pixel value (image having many high frequency components) in the macroblock of a predetermined size than in an image with small change in pixel value (image having many low frequency components).

Accordingly, when an image of a smaller image size or an image having a larger edge part is inputted, the image will have many parts changing rapidly in gradient of the image (pixel value) in the macroblock of a predetermined size, that is, the image will have many high frequency components, resulting in an restored image with great deterioration in the image quality. In other words, when an image of a smaller image size or an image having a larger edge part is inputted, there occurs a problem that if the input image is divided only into macroblocks of a single size and subjected to coding processing, the restored image greatly deteriorates in the image quality.

Further, generally, when the size of the macroblock into which the input image is divided is made large, the compression ratio of the image data of the input image becomes high, but an image having more high frequency components results in a restored image with image quality more greatly deteriorated. Therefore, in an image having many low frequency components, the image quality of the restored image can be maintained even though the size of the macroblock in compression processing is made relatively large to increase the compression ratio of the image data. However, in an image having many high frequency components, it is necessary to appropriately decide the size of the macroblock in the compression processing and divide the input image to increase the compression ratio of the image data while the image quality of the restored image is maintained.

However, the distribution of occurrence of pixel values (image data) of the original signal, the luminance signal, or the like in the input image is spread within a wide range, and additionally the shape of distribution of the pixel values is different depending on the kind of the input image. In other words, there is a problem that since the frequency distribution in the macroblock obtained by dividing the input image is different depending on the kind of the input image or the like, it is not easy to decide the size of the macroblock in the compression processing to be able to increase the compression ratio of the image data while the image quality of the restored image is maintained by calculating the frequency distribution in the macroblock in advance.

The present invention has been developed to solve the above-described problems, and it is an object thereof to make it possible to easily decide an appropriate size of a macroblock in compression processing in accordance with an input image so as to perform compression processing on image data of the input image at a high compression ratio maintaining the image quality of a restored image.

### Summary of the Invention

An image data compression apparatus of the present invention is characterized by including: an image size conversion means for performing predetermined processing on input image data inputted in an image block of m pixels × n pixels (where m and n are natural numbers) to change a size of the image block; a compression means for compressing image data in the image block changed in size by the image size conversion means; an expansion means for expanding compressed image data compressed by the compression means to generate restored image data in the m-pixel × n-pixel image block; a first correlation calculation means for obtaining a strength of a correlation between the restored image data generated by the expansion means and the input image data; and a judgment means for judging whether or not the size of the image block is further changed by the image size conversion means based on the strength of a first correlation outputted from the correlation calculation means.

Another characteristic of the image data compression apparatus of the present invention is that the apparatus includes: an image size conversion means for performing predetermined processing on input image data inputted in an image block of m pixels × n pixels (where m and n are natural numbers) to change a size of the image block; a compression means for compressing image data in the image block changed in size by the image size conversion means; an expansion means for expanding compressed image data compressed by the compression means to generate restored image data in the m-pixel × n-pixel image block; a first correlation calculation means for obtaining a strength of a correlation between the restored image data generated by the expansion means and the input image data; a second correlation calculation means for generating image data in a divided image block of a predetermined size based on the restored image data generated by the expansion means and obtaining a strength of a correlation between the generated image data in the divided image block and a part of the input image data corresponding to the divided image block; and a judgment means for judging whether or not the size of the image block is further changed by the image size conversion means based on the strength of a first correlation outputted from the first correlation calculation means and the strength of a second correlation outputted from the second correlation calculation means.

Still another characteristic of the image data compression apparatus of the present invention is that the second correlation calculation means cuts out image data in a divided image block of m' pixels × n' pixels (where m' and n' are natural numbers and m' ≦ m, n' ≦ n) from the restored image data generated by the expansion means and obtains a strength of a correlation between the cutout image data in the divided image block and a part of the input image data corresponding to the divided image block.

Still another characteristic of the image data compression apparatus of the present invention is that the second correlation calculation means combines the restored image data generated by the expansion means to generate image data in a divided image block of m' pixels × n' pixels (where m' and n' are natural numbers and m' > m, n' > n) and obtains a strength of a correlation between the generated image data in the divided image block and the input image data combined to correspond to the divided image block.

Still another characteristic of the image data compression apparatus of the present invention is that the apparatus further includes: an image block extraction means for extracting image data to be compressed being a compression object in a unit of the m-pixel × n-pixel image block and inputting the extracted image data to be compressed as the input image data.

Still another characteristic of the image data compression apparatus of the present invention is that the apparatus further includes a completely reversible coding means for performing completely reversible coding processing on compressed image data respectively corresponding to all the input image data compressed by the compression means when the judgment means judges that further change in size of the image block by the image size conversion means is not performed on all the input image data inputted from the image block extraction means.

Still another characteristic of the image data compression apparatus of the present invention is that the completely reversible coding means performs completely reversible coding processing, by a plurality of completely reversible coding methods, on the compressed image data respectively corresponding to all the input image data compressed by the compression means, the apparatus further including a completely reversible coding method selection means for comparing the compressed image data which have been subjected to the completely reversible coding processing by the plurality of completely reversible coding methods by the completely reversible coding means, and selecting a completely reversible coding method having a smallest data amount of the compressed image data which has been subjected to the completely reversible coding processing.

Still another characteristic of the image data compression apparatus of the present invention is that the apparatus further includes a resolution conversion means for converting a resolution of the image data to be compressed at a predetermined resolution change rate and supplying the resolution to the image block extraction means.

Still another characteristic of the image data compression apparatus of the present invention is that the strength of the correlation is a correlation value between each pixel value of image data relating to a restored image based on the restored image data generated by the expansion means and each pixel value of the input image data corresponding to the image data.

Still another characteristic of the image data compression apparatus of the present invention is that the correlation value is an S/N ratio between each pixel value of the image data relating to the restored image and each pixel value of the input image data corresponding to the image data.

Still another characteristic of the image data compression apparatus of the present invention is that the correlation value is a mean square error between each pixel value of the image data relating to the restored image and each pixel value of the input image data corresponding to the image data.

Still another characteristic of the image data compression apparatus of the present invention is that the correlation value is a differential absolute distance between each pixel value of the image data relating to the restored image and each pixel value of the input image data corresponding to the image data.

Still another characteristic of the image data compression apparatus of the present invention is that the judgment means judges that the size of the image block is further changed by the image size conversion means when the correlation value is smaller than a predetermined threshold value.

Still another characteristic of the image data compression apparatus of the present invention is that the judgment means judges that the size of the image block is further changed by the image size conversion means when the correlation value is larger than a predetermined threshold value.

Still another characteristic of the image data compression apparatus of the present invention is that the compression means and the expansion means perform compression and expansion by vector quantization using a code book method respectively.

Still another characteristic of the image data compression apparatus of the present invention is that patterns of an image block of a pixels × b pixels (where a and b are natural numbers) in the code book are arranged such that patterns with a smallest mean square error have adjacent addresses.

Still another characteristic of the image data compression apparatus of the present invention is that patterns of an image block of a pixels × b pixels (where a and b are natural numbers) in the code book are arranged such that patterns with a smallest differential absolute distance have adjacent addresses.

Still another characteristic of the image data compression apparatus of the present invention is that patterns of an image block of a pixels × b pixels (where a and b are natural numbers) in the code book are arranged adjacent under a predetermined rule, and a predetermined number of patterns having element values in the a-pixel × b-pixel image block which are all the same are further arranged at adjacent addresses prior or subsequent to addresses at which the patterns of the image pattern are arranged under the predetermined rule.

Still another characteristic of the image data compression apparatus of the present invention is that the apparatus includes: a compression means for compressing input image data inputted by a predetermined compression method; a completely reversible coding means for performing completely reversible coding processing, by a plurality of completely reversible coding methods, on compressed image data obtained by compressing the input image data by the compression means; and a completely reversible coding method selection means for comparing the compressed image data which have been subjected to the completely reversible coding processing by the completely reversible coding means, and selecting a completely reversible coding method having a smallest data amount of the compressed image data which has been subjected to the completely reversible coding processing.

Still another characteristic of the image data compression apparatus of the present invention is that the compression means compresses the input image data by vector quantization using a code book method.

Still another characteristic of the image data compression apparatus of the present invention is that patterns of an image block of a pixels × b pixels (where a and b are natural numbers) in the code book are arranged such that patterns with a smallest mean square error have adjacent addresses.

Still another characteristic of the image data compression apparatus of the present invention is that patterns of an image block of a pixels × b pixels (where a and b are natural numbers) in the code book are arranged such that patterns with a smallest differential absolute distance have adjacent addresses.

Still another characteristic of the image data compression apparatus of the present invention is that patterns of an image block of a pixels × b pixels (where a and b are natural numbers) in the code book are arranged adjacent under a predetermined rule, and a predetermined number of patterns having element values in the a-pixel × b-pixel image block which are all the same are further arranged at adjacent addresses prior or subsequent to addresses at which the patterns of the image pattern are arranged under the predetermined rule.

An image data compression method according to the present invention is characterized by including: performing predetermined processing on input image data inputted in an image block of m pixels × n pixels (where m and n are natural numbers) to change a size of the image block; compression-processing image data in the image block changed in size; expansion-processing compressed image data obtained by the compression processing to generate restored image data in the m-pixel × n-pixel image block; obtaining a first correlation strength indicating a strength of a correlation between the generated restored image data and the input image data; and judging whether or not the size of the image block is further changed based on the first correlation strength.

Still another characteristic of the image data compression method of the present invention is that the method includes: performing predetermined processing on input image data inputted in an image block of m pixels × n pixels (where m and n are natural numbers) to change a size of the image block; compression-processing image data in the image block changed in size; expansion-processing compressed image data obtained by the compression processing to generate restored image data in the m-pixel × n-pixel image block; obtaining a first correlation strength indicating a strength of a correlation between the generated restored image data and the input image data; generating image data in a divided image block of a predetermined size based on the generated restored image data; obtaining a second correlation strength indicating a strength of a correlation between the generated image data in the divided image block and a part of the input image data corresponding to the divided image block; and judging whether or not the size of the image block is further changed based on the first correlation strength and the second correlation strength.

Still another characteristic of the image data compression method of the present invention is that image data in a divided image block of m' pixels × n' pixels (where m' and n' are natural numbers and m' ≦ m, n' ≦ n) is cut out from the generated restored image data, and a strength of a correlation between the cutout image data in the divided image block and a part of the input image data corresponding to the divided image block is obtained as the second correlation strength.

Still another characteristic of the image data compression method of the present invention is that the generated restored image data are combined to generate image data in a divided image block of m' pixels × n' pixels (where m' and n' are natural numbers and m' > m, n' > n), and a strength of a correlation between the generated image data in the divided image block and the input image data combined to correspond to the divided image block is obtained as the second correlation strength.

Still another characteristic of the image data compression method of the present invention is that the method further includes: extracting image data to be compressed being a compression object in a unit of the m-pixel × n-pixel image block and inputting the extracted image data to be compressed as the input image data; and performing completely reversible coding processing on compressed image data respectively corresponding to all the input image data obtained by the compression processing when it is judged that further change in size of the image block is not performed on all the input image data inputted.

Still another characteristic of the image data compression method of the present invention is that the method further includes: performing completely reversible coding processing, by a plurality of completely reversible coding methods, on the compressed image data respectively corresponding to all the input image data obtained by the compression processing; and selecting a completely reversible coding method having a smallest data amount of the compressed image data which have been subjected to the completely reversible coding processing by the plurality of completely reversible coding methods.

Still another characteristic of the image data compression method of the present invention is that the method further includes converting a resolution of image data to be compressed being a compression object at a predetermined resolution change rate, extracting image data to be compressed converted in resolution in a unit of the m-pixel × n-pixel image block, and inputting the extracted image data to be compressed as the input image data.

Still another characteristic of the image data compression method of the present invention is that the strength of the correlation is a correlation value between each pixel value of image data relating to a restored image based on the generated restored image data and each pixel value of the input image data corresponding to the image data.

Still another characteristic of the image data compression method of the present invention is that the correlation value is any of an S/N ratio, a mean square error, and a differential absolute distance between each pixel value of the image data relating to the restored image and each pixel value of the input image data corresponding to the image data.

Still another characteristic of the image data compression method of the present invention is that the compression processing and the expansion processing perform compression and expansion by vector quantization using a code book method respectively.

Still another characteristic of the image data compression method of the present invention is that the method includes: compression-processing input image data inputted by a predetermined compression method; performing completely reversible coding processing, by a plurality of completely reversible coding methods, on compressed image data obtained by the compression processing; and selecting a completely reversible coding method having a smallest data amount of the compressed image data which has been subjected to the completely reversible coding processing.

Still another characteristic of the image data compression method of the present invention is that the compression processing compresses the input image data by vector quantization using a code book method.

A computer readable recording medium of the present invention is characterized in that the recording medium has a program product recorded thereon, the program product including a computer readable program code means for functioning as each of the above-described means.

Further, another characteristic of the computer readable recording medium of the present invention is that the recording medium has a program recorded thereon, the program product including a computer readable program code means for performing procedure of the image data compression method.

A computer program product of the present invention is characterized by including a computer readable program code means for functioning as each of the above-described means.

Further, another characteristic of the computer program product of the present invention is that the computer program product includes a computer readable program code means for performing procedure of the image data compression method.

### Brief Description of the Drawings

Fig. 1 is a view for explaining a principle of image compression and expansion by vector quantization;
Fig. 2 is a flowchart showing a processing procedure of an image data compression method according to a first embodiment of the present invention;
Fig. 3 is a schematic view for explaining image size conversion processing;
Fig. 4 is a block diagram showing a configuration example of an image data compression apparatus according to the first embodiment;
Fig. 5 is a block diagram showing a detailed configuration of a completely reversible coding section;
Fig. 6 is a flowchart showing a procedure of a data expansion method according to the first embodiment;
Fig. 7 is a flowchart showing a processing procedure of an image data compression method according to a second embodiment of the present invention;
Fig. 8 is a schematic view for explaining a resolution conversion processing method;
Fig. 9 is a block diagram showing a configuration example of an image data compression apparatus according to the second embodiment;
Fig. 10 is a flowchart showing a procedure of a data expansion method according to the second embodiment;
Fig. 11 is a flowchart showing a processing procedure of a image data compression method according to a third embodiment of the present invention;
Fig. 12 a schematic view for explaining restored image block dividing processing and first correlation value judgment processing; and
Fig. 13 is a block diagram showing a configuration example of an image data compression apparatus according to the third embodiment.

### Detailed Description of the Preferred Embodiments

Hereinafter, embodiments of the present invention will be described with reference to the drawings. Each of the embodiments illustrated below takes, for example, still images constituting a moving image as an example of image data being an object to be compressed and achieves a further improvement in image quality of a restored image generated from compressed image data and in compression ratio of image data.

### (First Embodiment)

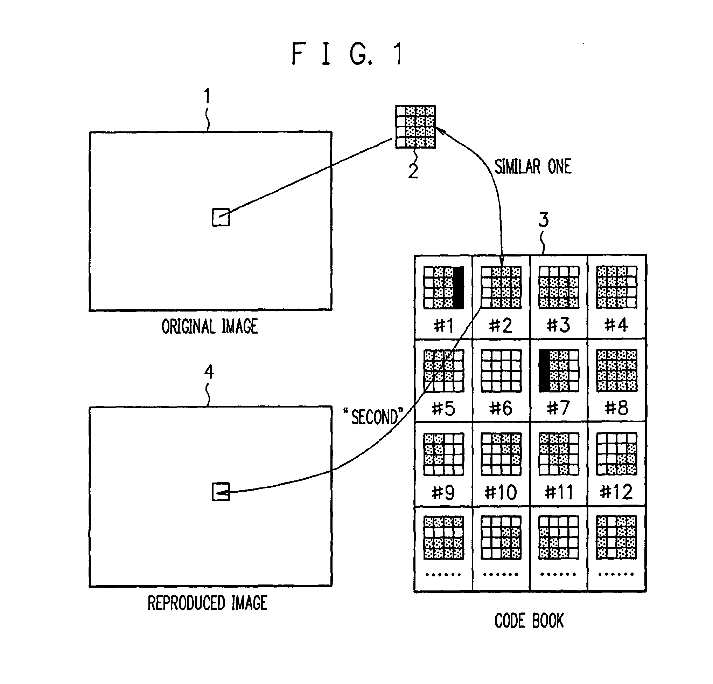

First, referring to Fig. 1 to Fig. 6, a first embodiment of the present invention will be described.

Note that, in this embodiment, vector quantization (VQ) which can easily perform expansion processing on compressed data is used as a technique of dividing an input image into pixel blocks (macroblocks) of a predetermined size and compressing it. First of all, the principle of image compression and expansion by the vector quantization will be described taking a still image as an example and referring to Fig. 1.

Fig. 1 is a view for explaining the image compression and expansion by the vector quantization.

As shown in Fig. 1, an input image 1 inputted as image data to be compressed is constituted of a number of elements called pixels. An individual pixel has information of a luminance signal (Y signal) and a color signal (U, V signals) converted from an RGB signal.

A block constituted of a plurality of pixels extracted from the input image 1 is an input image block (macroblock) 2. In the example of Fig. 1, the selected size of the input image block 2 is 4 pixels × 4 pixels, but any size is selectable for this block. The input image block 2 is constituted of a plurality of pixels as described above, and luminance signal values and color signal values retained by the respective pixels can be gathered to generate vector data respectively. This is input vector data.

Here, some input image blocks 2 in the input image 1 may look almost the same in appearance due to visual characteristics of human beings. The plurality of input image blocks 2 looking the same can be represented by a smaller number of image blocks. A code book 3 includes a plurality of image blocks (code vector data) representing a number of input image blocks 2 on the input image 1. The code vector data is generated by bringing the luminance signal values and the color signal values retained by the respective pixels constituting the image block in the code book 3 into vector data.

In the vector quantization, the entire input image 1 is divided into input image blocks, and taking each input image block 2 as an input vector data, code vector data similar to the input vector data is retrieved from the code book 3. Then, only a corresponding number of the code vector data is transferred, thereby enabling compression of the image. To obtain a reproduced image 4 by reproducing the compressed image, code vector data corresponding to the number transferred is read from the code book 3 and applied to the image.

In the first embodiment, the input image block 2 which is obtained by dividing the input image into pieces of a predetermined size and extracting one is subjected to enlargement processing or reduction processing depending on a processing method, thereafter divided into macroblocks to be compressed of a predetermined size, and subjected to the vector quantization.

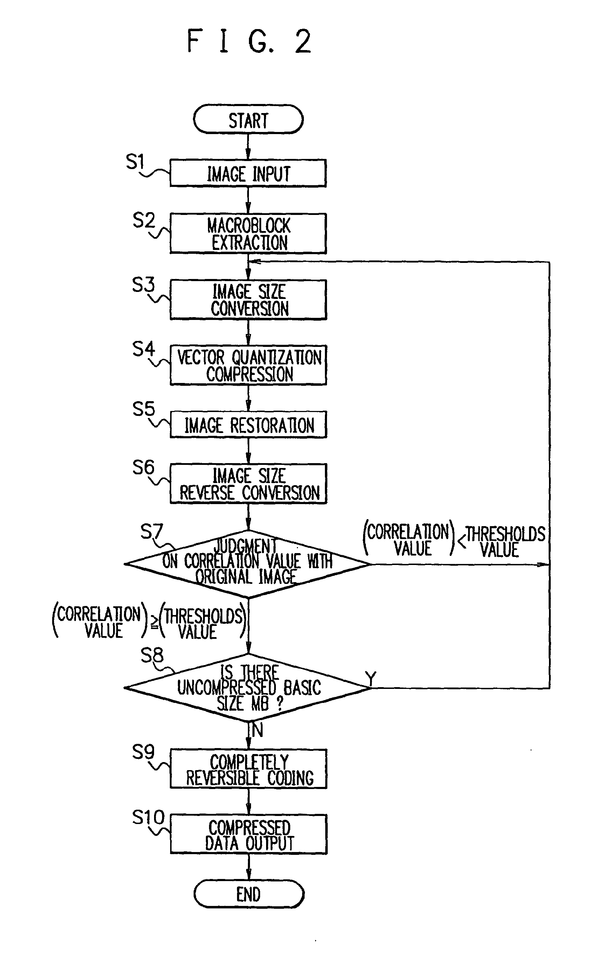

Fig. 2 is a flowchart showing a processing procedure of an image data compression method according to the first embodiment.

First, in step S1, the input image 1 is inputted. Then, in step S2, a basic size macroblock (hereinafter, referred to as a "basic size MB") 5 is extracted from the input image 1. In other words, the input image 1 is divided into the basic size MBs 5 of a predetermined size. Here, the basic size MB 5 is a macroblock constituted of the number pixels equal to or more than that of a later-described compression object macroblock (hereinafter, called a "compression object MB").

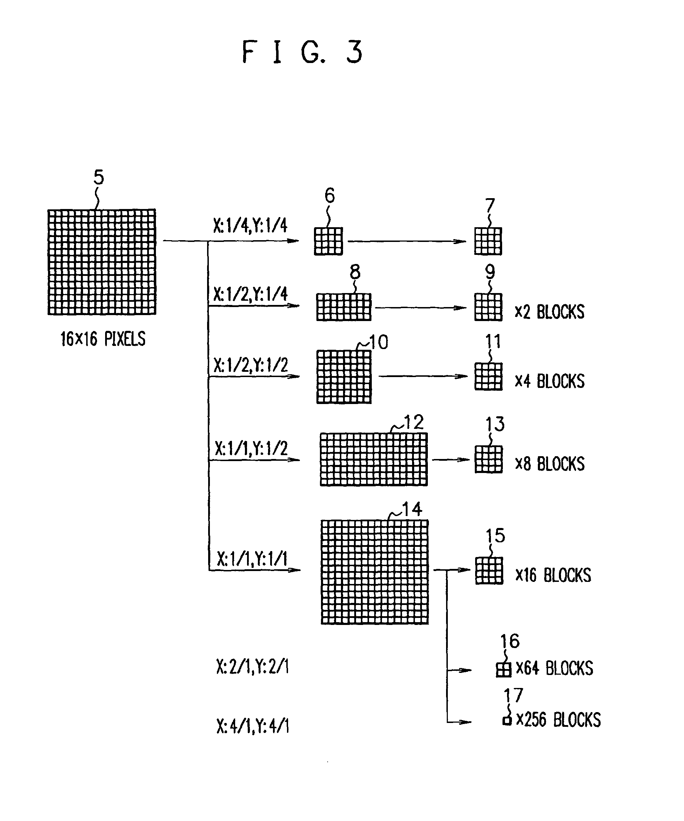

For example, if the compression object MB has a size of 4 pixels × 4 pixels as shown in Fig. 3, the basic size MB 5 may preferably have a size of 16 pixels × 16 pixels. Note that, the basic size MB having a size of 16 pixels × 16 pixels is shown as an example here, but this size can be arbitrarily set.

Next, in step S3, one basic size MB 5 of the basic size MBs 5 extracted in the step S2 is subjected to image size conversion processing. In the image size conversion processing, the basic size MB 5 is subjected to reduction processing at a predetermined reduction ratio to be changed in size and then divided into compression object MBs of a predetermined size. Details of the image size conversion processing in this step S3 will be described later.

In step S4, the compression processing by the vector quantization is performed on the compression object MB divided in the predetermined size in the step S3, and a code number of the code vector data is outputted as a processing result. In this step S4, the compression processing by the vector quantization is performed on all of the compression object MBs divided in the predetermined size in the step S3.

Then, in step S5, the image is restored based on the code numbers obtained on all of the compression object MBs in the step S4. More specifically, in step S5, the code vector data corresponding to the code numbers are read from the code book respectively, and the read code vector data are combined to restore the image.

In step S6, the image constituted of the code vector data restored in the step S5 is subjected to enlargement processing into the same size as that of the basic size MB 5, whereby the restored image of the same size as that of the basic size MB 5 can be obtained.

Next, in step S7, a correlation value between the restored image obtained in the step S6 and the image of the basic size MB 5 corresponding to the restored image, for example, an S/N ratio is calculated to judge whether or not it is equal to or more than a threshold value. In other words, in step S7, whether or not there is a problem in the image quality of the restored image generated based on the image data compression-processed by the vector quantization.

As a result of the judgment, if the correlation value is smaller than the threshold value, the flow returns to the image size conversion processing in the step S3, in which the predetermined reduction ratio at which the basic size MB 5 is reduced is changed, and then the processing in the steps S3 to S7 is repeatedly performed.

On the other hand, as the result of the judgment, if the correlation value is equal to or larger than the threshold value, the reduction ratio of the basic size MB 5 in the step S3 and the code numbers obtained in the step S4 are outputted, and then the flow proceeds to step S8.

In step S8, whether or not there is a basic size MB 5 which has not been subjected to the compression processing by the vector quantization is judged. As a result of the judgment, if there is a basic size MB 5 which has not been subjected to the compression processing by the vector quantization, the flow returns to the step S3, and then the above-described processing in step S3 to step S7 is performed.

On the other hand, if there is no basic size MB 5 which has not been subjected to the compression processing by the vector quantization, that is, if the compression processing by the vector quantization for all of the basic size MBs 5 extracted in the step S2 is completed, the flow proceeds to step S9.

Next, in step S9, the code numbers for all of the basic size MBs 5 obtained respectively by the above-described processing are subjected to completely reversible coding processing.

Here, in the completely reversible coding processing, the code number is subjected to completely reversible coding processing by at least one of completely reversible coding methods, for example, an LZSS compression method and Huffman coding. Then, if the completely reversible coding processing is implemented by a plurality of completely reversible coding processing methods, data amounts after the completely reversible coding processing are compared to each other, and data after the completely reversible coding processing having the smallest data amount is selected. Further, information representing the completely reversible coding processing method employed for the entire image and information about the reduction ratio for each basic size MB 5 are written as a header of the compressed data, combined with the data after the completely reversible coding processing, and then outputted as compressed data.

Next, in step S10, the compressed data obtained in the step S9 is outputted as compressed data of the input image inputted in the step S1, and the processing is ended.

Note that, as the code vector data used here in the step S4, it is either possible to use those in a different code book depending on the reduction ratio of each basic size MB 5 and the size of the compression object MB or to use those in a common code book.

Next, the image size conversion processing in the step S3 shown in Fig. 2 will be described in detail referring to Fig. 3.

Fig. 3 is a schematic view for explaining the image size conversion processing.

Note that, in the following description, a macroblock constituted of (X × Y) pixels in which X pixels are arranged in the horizontal direction and Y pixels are arranged in the vertical direction is described as an X-pixel × Y-pixel macroblock. Further, Fig. 3 shows as an example a case in which a 16-pixel × 16-pixel basic size MB 5 is extracted from the input image 1 in the step S2 shown in Fig. 2.

First of all, the basic size MB 5 is extracted in the step S2 in Fig. 2, and thereafter, in the image size conversion processing performed first, reduction processing is performed such that the extracted basic size MB 5 are reduced in size in the vertical direction and the horizontal direction to 1/4 respectively, that is, the basic size MB 5 is reduction-processed to 1/4, whereby a 4-pixel × 4-pixel reduced macroblock (hereinafter, called a "reduced MB") 6 is obtained. The obtained 4-pixel × 4-pixel reduced MB 6 is taken as a compression object MB 7 which is subjected to the above-described processing shown in step S4 to step S7 shown in Fig. 2 such as the compression processing by the vector quantization and the like.

In the reduction processing, an average value of a pixel value of an interest pixel and pixel values of pixels lying near there is calculated, and its calculation result is taken as a central value to obtain the reduced MB 6. Further, not limited to the above-described reduction processing, for example, the 16-pixel × 16-pixel basic size MB 5 is divided into sixteen 4-pixel × 4-pixel blocks, and an average value of pixel values in each block may be calculated, and its calculation result may be taken as a central value to obtain the reduced MB 6. Alternatively, it is also adoptable that in the 16-pixel × 16-pixel basic size MB 5, a pixel value extracted at a predetermined interval is taken as a central value to obtain the reduced MB 6, that is, pixels are thinned-out depending on the reduction ratio to obtain the reduced MB 6. Alternatively, it is also adoptable that the ratio between distances between an interest pixel and pixels lying near the pixel are obtained, and a linear interpolation method in which the pixel value of the interest pixel is obtained from the pixel values of the near pixels is used to obtain the reduced MB 6.

The processing in step S4 to step S7 shown in Fig. 2 is performed on the compression object MB 7 and, depending on the result of the judgment in step S7, if the flow returns again to the processing in step S3, the reduction ratio at which the basic size MB 5 is reduced is changed. Then, reduction processing is performed such that the basic size MB 5 is reduced in size in the horizontal direction to 1/2 and in size in the vertical direction to 1/4, whereby a 8-pixel × 4-pixel reduced MB 8 is obtained. This 8-pixel × 4-pixel reduced MB is divided into two 4-pixel × 4-pixel macroblocks 9 which are used as the compression object MBs and subjected to the processing in step S4 to step S7 shown in Fig. 2.

As a result of the processing in the 8-pixel × 4-pixel reduced MB 8 obtained by performing reduction processing on the basic size MB 5, if the flow returns again to the processing in step S3, the reduction ratio at which the basic size MB 5 is reduced is changed. Then, reduction processing is performed such that the basic size MB 5 is reduced in size in the horizontal direction to 1/2 and in size in the vertical direction to 1/2, whereby an 8-pixel × 8-pixel reduced MB 10 is obtained. This 8-pixel × 8-pixel reduced MB 10 is divided into four 4-pixel × 4-pixel macroblocks 11 which are used as the compression object MBs and subjected to the processing in step S4 to step S7 shown in Fig. 2.

Then, if the flow returns again to the processing in step S3, the basic size MB 5 is reduced in size in the horizontal direction to 1/1 and in size in the vertical direction to 1/2, whereby a 16-pixel × 8-pixel reduced MB 12 is obtained. This 16-pixel × 8-pixel reduced MB 12 is divided into eight 4-pixel × 4-pixel macroblocks 13 which are used as the compression object MBs and subjected to the processing in step S4 to step S7 shown in Fig. 2.

Then, if the flow returns again to the processing in step S3, the reduction ratio at which the basic size MB 5 is reduced is changed, and reduction processing is performed such that the basic size MB 5 is reduced in size in the horizontal direction to 1/1 and in size in the vertical direction to 1/1. In other words, the inputted 16-pixel × 16-pixel basic size MB 5 is not changed in size to be used as a reduced MB 14. This reduced MB 14 is divided into sixteen 4-pixel × 4-pixel macroblocks 15 which are used as the compression object MBs and subjected to the processing in step S4 to step S7 shown in Fig. 2.

If the flow returns still again to the processing in step S3, the reduction ratio at which the basic size MB 5 is reduced is changed, and reduction processing is performed such that the basic size MB 5 is reduced in size in the horizontal direction to 2/1 and in size in the vertical direction to 2/1. In other words, the inputted 16-pixel × 16-pixel basic size MB 5 is enlarged in size to be twice in the horizontal direction and the vertical direction respectively. This enlarged MB may then be divided into 4-pixel × 4-pixel macroblocks, but in Fig. 3 the inputted 16-pixel × 16-pixel macroblock 14 is divided into 2-pixel × 2-pixel macroblocks 16, the division being operation equivalent to the above-described processing. In this event, 64 2-pixel × 2-pixel macroblocks 16 will be obtained and used as the compression object MBs and subjected to the processing in step S4 to step S7 shown in Fig. 2.

If the flow returns again to the processing in step S3, the reduction ratio at which the basic size MB 5 is reduced is changed, and reduction processing is performed such that the basic size MB 5 is reduced in size to 4/1 in the horizontal direction and in size in the vertical direction to 4/1. In other words, the inputted 16-pixel × 16-pixel basic size MB 5 is enlarged in size to be quadruple in the horizontal direction and the vertical direction respectively. This enlarged MB may then be divided into 4-pixel × 4-pixel macroblocks, but in Fig. 3 the inputted 16-pixel × 16-pixel macroblock 14 is divided into 1-pixel × 1-pixel macroblocks 17. In this event, 256 1-pixel × 1-pixel macroblocks 17 will be obtained.

Although these 1-pixel × 1-pixel macroblocks 17 can be used as the compression object MBs and subjected to the processing in step S4 to step S7, it is also possible to omit the operation in step S4 to step S7, perform the completely reversible coding processing in step S9, and output compressed data in step S10 because these macroblocks 17 represent the pixels themselves.

In this manner, as a result of the judgment using the correlation value between the restored image in step S7 shown in Fig. 2 and the image of the basic size MB 5, when there is a problem in the image quality of the restored image (reproduced image) in a size of the reduced MB obtained at a current reduction ratio is determined, the reduction ratio at which the basic size MB 5 is reduced in step S3 is changed, whereby the image data can be compressed with deterioration in the image quality of the restored image (reproduced image) being restrained.

Further, as a result of the judgment using the correlation value in the step S7, if the predetermined threshold value condition is satisfied, the image data can be compressed into a reduced MB of a larger size, and therefore a substantial improvement in the compression ratio can be achieved.

Note that the case using the basic size MB 5 of 16 pixels × 16 pixels is shown as an example in the image size conversion processing shown in Fig. 3, but a basic size MB of an arbitrary size can be used as the basic size MB 5.

Regarding the change in the reduction ratio at which the basic size MB 5 is reduced, the change in the reduction ratio shown in Fig. 3 is merely an example, and employment of other reduction methods will present no problem. Besides, in Fig. 3, when changing the reduction ratio at which the basic size MB 5 is reduced, the reduction ratio in the vertical direction is set equal to or smaller than the reduction ratio in the horizontal direction at all times, but it is needless to say that the reduction ratio in the vertical direction can be equal to or larger than the reduction ratio in the horizontal direction. In short, describing the reduction ratios in the horizontal direction and the vertical direction as (X, Y), the reduction ratios may be changed, for example, (1/4, 1/4) → (1/4, 1/2) → (1/2, 1/4) → (1/2, 1/2) → ... or (1/4, 1/4) → (1/4, 1/2) → (1/2, 1/2) → ···.

Further, it is also adoptable that a predetermined threshold value condition for judging whether the reduction ratio at which the basin size MB 5 is reduced is changed nor not is set as necessary in step S7 in Fig. 2 based on the correlation value between the restored image and the basic size MB 5 corresponding to the restored image, thereby forcibly preventing the reduction ratio from being changed after an arbitrary reduction ratio is set (preventing the flow from returning to the processing in step S3 shown in Fig. 2) or inhibiting the image data which has been subjected to the compression processing at an arbitrary reduction ratio from being outputted. For example, setting a threshold value condition which can be satisfied at all times as the threshold value condition can prevent the reduction ratio from being changed thereafter, and contrarily, setting a threshold value condition which cannot be satisfied at all times can inhibit the image data which has been subjected to the compression processing at an arbitrary reduction ratio from being outputted.

Besides, while the 4-pixel × 4-pixel, 2-pixel × 2-pixel, and 1-pixel × 1-pixel compression object MBs are taken as examples of the size of the compression object MB on which the compression processing by the vector quantization is performed, use of a compression object MB of any size will exert no influence on the effect of the present invention.

Further, in the image size conversion processing shown in Fig. 3, such an example is illustrated that the 16-pixel × 16-pixel basic size MB 5 is used, and the basic size MB 5 is reduced and divided into 4-pixel × 4-pixel macroblocks or 2-pixel × 2-pixel macroblocks which are subjected to the compression processing by the vector quantization. However, when the basic size MB 5 is reduced in size in the horizontal direction and the vertical direction to 1/4 into a 4-pixel × 4-pixel macroblock, not the basic size MB 5 is subjected to the compression processing, but a 16-pixel × 16-pixel code vector data is prepared in the code book in advance, so that the size of the compression object MB by the vector quantization is changed from the 4-pixel × 4-pixel to the 16-pixel × 16-pixel, whereby the same effect can also be obtained.

Instead of reducing the basic size MB 5 and dividing it into macroblocks of 4 pixels × 4 pixels, 2 pixels × 2 pixels, or the like as described above, the basic size MB 5 is divided into macroblocks of a size suitable for its reduction ratio (16 pixels × 16 pixels, 8 pixels × 16 pixels, 8 pixels × 8 pixels, 4 pixels × 8 pixels, 4 pixels × 4 pixels, 2 pixels × 2 pixels, or 1 pixel × 1 pixel), while code vector data is prepared in the code book in advance, and is subjected to compression processing by the vector quantization, whereby the same effect as that of the present invention can be obtained.

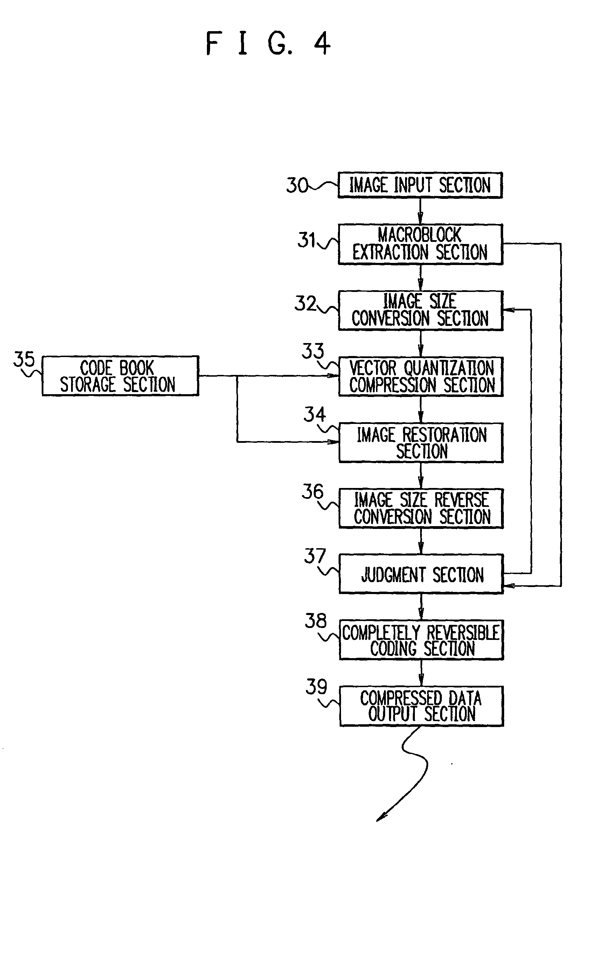

Next, referring to Fig. 4, a configuration of an image data compression apparatus which realizes the above-described image data compression method will be described. Fig. 4 is a block diagram showing a configuration example of the image data compression apparatus according to the first embodiment.

The input image 1 is inputted into an image input section 30. A macroblock extraction section 31 extracts the basic size MB 5 from the input image 1. An image size conversion section 32 converts the size of the basic size MB 5 extracted by the macroblock extraction section 31 at a predetermined reduction ratio in a manner shown in Fig. 3 to generate the compression object MB on which the compression processing is performed in a vector quantization compression section 33.

The vector quantization compression section 33 performs compression processing on the compression object MB supplied from the image size conversion section 32 using the code vector data constituting the code book held in a code book storage section 35. An image restoration section 34 reads code vector data held in the code book storage section 35 based on the code number of code vector data outputted as a result of the compression processing by the vector quantization compression section 33, and combines the read code vector data to generate an image.

Here, the code book includes, for example, 2048 pieces of code vector data, and the code vector data of the same size are arranged in the code book data such that the mean square error of code vector data at addresses adjacent to each other is minimum. Note that it is also adoptable to arrange in the code book the code vector data of the same size such that the differential absolute distance of code vector data at addresses adjacent to each other is minimum.

Further, in the code book in which the code vector data are arranged as described above, it is also adoptable to further arrange only the predetermined number (for example, for the gradation value of a pixel) of code vector data having the same size, having respective elements all having the same values, and different from each other (code vector data in a solid pattern of the same size and different from each other) at the first address of the code vector data of the same size (an address adjacent to the front of the minimum address of the code vector data) or the last address (an address adjacent to the rear of the maximum address of the code vector data).

Further, there is no problem when any technique is used as long as it is a technique in which code vector data are arranged in the code book such that the code vector data distortion between code vector data at addresses adjacent to each other becomes small.

By arranging the code vector data in the code book using the mean square error or the like in advance as described above, the retrieval time for the code vector data can be shortened in the compression processing to increase the speed of the compression processing. In addition, there is an advantage that the image data outputted after the compression processing by the vector quantization have code numbers of the code vector data biased due to characteristics of image to lead to an increase in coding efficient by the completely reversible coding, so that the compressed data is smaller in data size.

An image size reverse conversion section 36 performs conversion reverse to the processing performed in the image size conversion section 32 on the image generated by the image restoration section 34 to generate a restored image of the same size as that of the basic size MB 5.

A judgment section 37 calculates a correlation value (for example, S/N ratio) between the restored image generated by the image size reverse conversion section 36 and the basic size MB 5 corresponding to the restored image. Further, the judgment section 37 compares the calculated correlation value with a preset threshold value, to thereby judge whether deterioration in image quality of the restored image generated by the image size reverse conversion section 36 is large or not.

As a result of the judgment, if it is judged that the deterioration in image quality of the restored image generated by the image size reverse conversion section 36 is large, the judgment section 37 changes the reduction ratio at which the basic size MB 5 is reduced is changed and instructs the image size conversion section 32 or the like to perform the compression processing by the vector quantization again. On the other hand, as a result of the judgment, if it is judged that the deterioration in image quality of the restored image generated by the image size reverse conversion section 36 is not so large, the judgment section 37 outputs the reduction ratio of the basic size MB 5 and the code number of the code vector data.

The completely reversible coding section 38 performs completely reversible coding processing on the code number of the code vector data outputted from the judgment section 37 by at least one completely reversible coding method, and when performing the completely reversible coding processing by a plurality of completely reversible coding methods, the completely reversible coding section 38 selects data having the smallest data amount after the completely reversible coding processing. Then, the completely reversible coding section 38 writes information representing the completely reversible coding method employed for the entire image and information about the reduction ratio for each basic size MB 5 as the header of compressed data, and combines them with the data after the completely reversible coding processing and outputs the resultant data as compressed data.

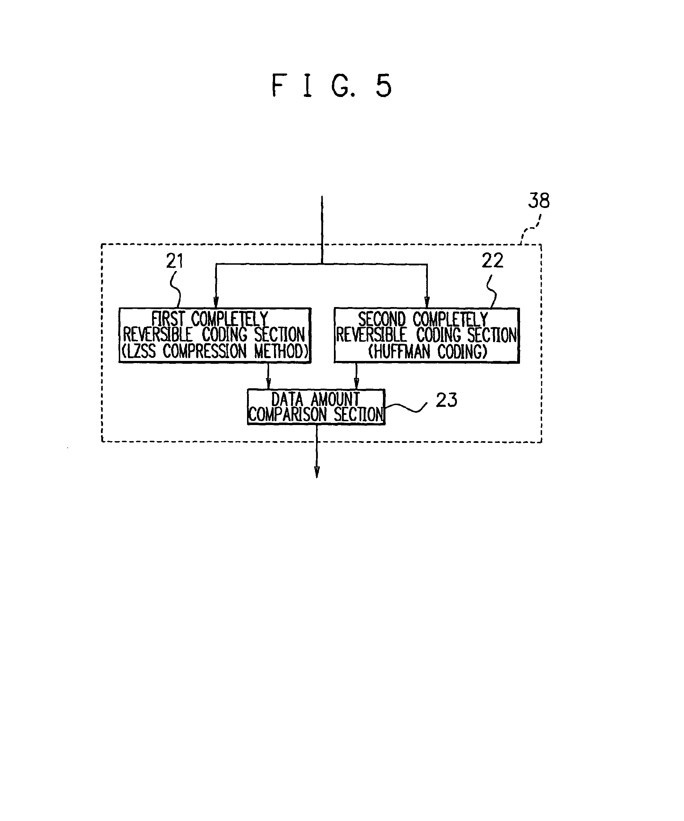

Fig. 5 is a block diagram showing a detailed configuration of the completely reversible coding section 38.

In Fig. 5, a first and a second completely reversible coding section 21 and 22 perform compression processing on the code number of the code vector data supplied from the judgment section 37 shown in Fig. 4 by the LZSS compression method and the Huffman coding method respectively and supply them to a data amount comparison section 23.

The data amount comparison section 23 compares the data amounts of the code number which has been subjected to the compression processing by the first and second completely reversible coding sections 21 and 22. Further, the data amount comparison section 23 selects a completely reversible coding method by which the resultant data amount is the smallest as a result of the comparison, writes information representing the selected completely reversible coding method and information about the reduction ratio for each basic size MB 5 as the header of compressed data, and combines them with the data after the selected completely reversible coding processing and outputs the resultant data as the compressed data.

Note that while the LZSS compression method and the Huffman coding method are employed as the completely reversible coding method in Fig. 5, it is needless to say that the present invention is not limited to the above-described completely reversible coding methods, but may employ other completely reversible coding methods. In addition, there is no problem when three or more kinds of completely reversible coding methods are employed. As described above, in the completely reversible coding processing, the compression processing is performed by a plurality of different completely reversible coding methods and then the completely reversible coding method having the smallest data amount is employed, whereby an optimal completely reversible coding method according to the kind of the input image, that is, the way the code numbers are arranged can be selected to achieve substantial improvement in the reduction ratio as compared with the compression processing by one kind of completely reversible coding method in the prior art.

Returning to Fig. 4, a compressed data output section 39 transmits to an external part and records in am internal part the compressed data outputted by the completely reversible coding section 38 as the compressed data of the input image inputted into the image input section 30.

It should be noted that it is possible to use different code books depending on the reduction ratio of each basic size MB 5 and the size of the compression object MB and a common code book for the code vector data used in the vector quantization compression section 33.

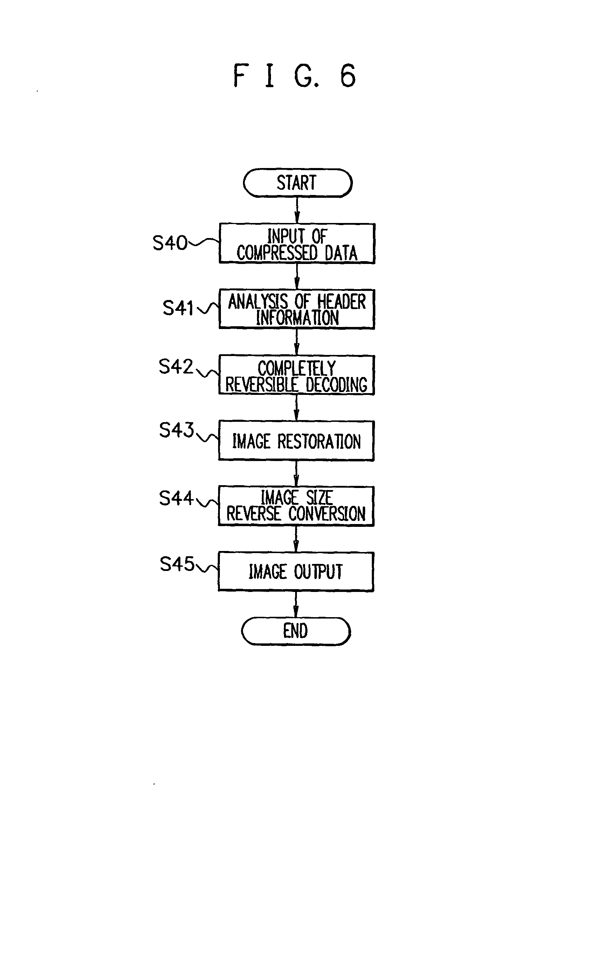

Next, referring to Fig. 6, an expansion method of data when the image data compression is performed by the image data compression method according to the first embodiment will be described. Fig. 6 is a flowchart showing a procedure of a data expansion method.

First, in step S40, the compressed data which has been subjected to the compression processing by the vector quantization and the completely reversible coding is inputted. In step S41, the header information is extracted from the compressed data inputted in the step S40, and the information representing the completely reversible coding method and the information about the reduction ratio of the basic size MB 5 are extracted, so that the method of expansion processing is decided based on the information.

In step S42, the compressed data is decoded in accordance with the completely reversible coding method indicated by the information representing the completely reversible coding method extracted in the step S41. In step S43, code vector data corresponding to the code number obtained by decoding the compressed data is extracted from the code book. In this step S43, one or a plurality of code vector data constituting one basic size MB 5 is extracted based on the information about the reduction ratio of the basic size MB 5 extracted in step S41.

In step S44, combination of code vector data and enlargement processing of the image are performed based on the code vector data extracted in the step S43 and the information about the reduction ratio of the basic size MB 5 extracted in step S41, to generate a restored image of the 16-pixel × 16-pixel basic size MB 5. The above-described processing is repeated on all of the basic size MBs 5 to thereby synthesize a restored image, and in step S45, the restored image is reproduced.

As has been described, according to the first embodiment of the present invention, first the basic size MB 5 is extracted from the input image 1, then the enlargement processing or reduction processing is performed on the above-described basic size MB 5 depending on a predetermined processing method, the resultant basic size MB 5 is divided into reduced MBs of a desired size and then subjected to the compression processing by the vector quantization, the restored image generated based on the compression-processed image data is compared with the aforementioned input image 1, the enlargement processing or the reduction processing is repeatedly performed on the basic size MB 5 until the restored image has no longer quality problem, and the compression processing by the vector quantization is performed. Further, after comparison of the data amounts after the completely reversible coding processing by a plurality of completely reversible coding methods, a completely reversible coding method having a higher reduction ratio is selected. This enables achievement of a substantial improvement in the reduction ratio of the image data of the input image 1 with the deterioration in the image quality of the restored image restrained to a minimum.

It should be noted that while the compression processing by the vector quantization is performed on all of the compression object MBs constituting the basic size MB5, and thereafter the correlation value between the restored image and the image of the basic size MB 5 is calculated to judge the image quality of the restored image in the first embodiment, it is also adoptable that every time the compression processing by the vector quantization is performed on one compression object MB, the correlation value between the restored image of a part which has been subjected to the compression processing until then and the image of the basic size MB 5 of a part corresponding thereto is calculated to judge the image quality of the restored image. This makes it possible that when the image quality deterioration of the restored image is large, the reduction ratio at which the basic size MB 5 is reduced is changed with no compression processing performed on residual compression object MBs which have not been subjected to the compression processing by the vector quantization, leading to speedy compression processing of the input image 1.

Besides, while the 16-pixel × 16-pixel basic size MB 5 is shown as an example of the basic size MB 5 extracted from the input image 1, and the 4-pixel × 4-pixel, 2-pixel × 2-pixel, and 1-pixel × 1-pixel compression object MBs are shown as examples of the compression object MB to be generated by reducing and dividing the basic size MB 5 in the first embodiment, but the present invention is not limited to this example.

Further, square macroblocks each constituted of the same number of pixels in the vertical direction and the horizontal direction are used as the basic size MB 5 and the compression object MB in the first embodiment, but, not limited to square, rectangular macroblocks may be also used. For example, a 4-pixel × 5-pixel rectangular macroblock may be used as the compression object MB. In addition, it is not necessary to decide the reduction ratio to be an integral multiple of the size of the compression object MB such as 1/4, 1/2, or the like as the reduction ratio of the basic size MB5, and a macroblock of any size can be set.

Further, although the S/N ratio is shown as the correlation value between the restored image restored after the compression processing by the vector quantization and the image of the basic size MB5 corresponding to the restored image in the first embodiment, the present invention may use, not limited to the S/N ratio, any index, presenting no problem as long as it indicates the correlation between the restored image and the image of the basic size MB 5 corresponding to the restored image, for example, the differential absolute distance or the mean square error as the correlation value. However, when the differential absolute distance or the mean square error is used as the correlation value, it is configured that if the correlation value is larger than the predetermined threshold value in the step S7 in Fig. 2, the processing in step S3 to step S7 in Fig. 2 is performed, and if the correlation value is equal to or smaller than the threshold value, the flow proceeds to step S8 in Fig. 2.

Further, it is also adoptable that as an index indicating the correlation between the restored image and the basic size MB 5 corresponding to the restored image, a histogram of the correlation value is obtained, and based on its distribution whether retuning to step S3 in Fig. 2 or proceeding to step S8 is decided.

### (Second Embodiment)

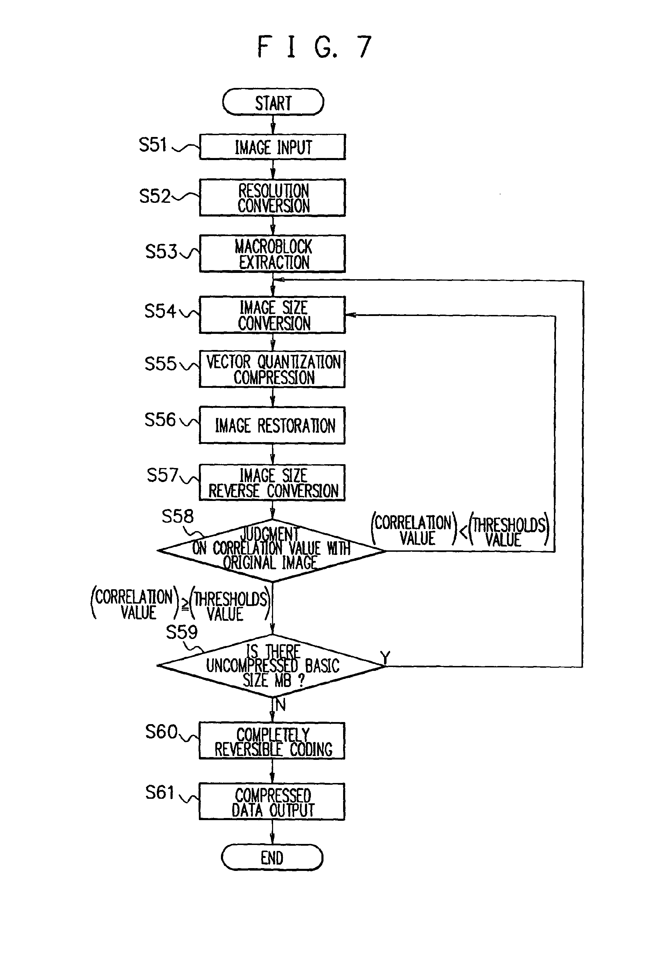

Referring to Fig. 7 to Fig. 10, a second embodiment of the present invention will be described. When the basic size MB is extracted, the extraction is performed with no processing performed on the input image 1 inputted in the first embodiment, but a basic size MB is extracted after resolution conversion processing is performed on an input image 1 inputted in the second embodiment.

Fig. 7 is a flowchart showing a processing procedure of an image data compression method according to the second embodiment.

Note that, in Fig. 7, step S51 and step S53 to step S61 correspond to step S1 and step S2 to step S10 in the above-described image compression method according to the first embodiment respectively and perform the same processing as that in the image data compression method according to the first embodiment, and thus description thereof will be omitted. In the second embodiment, in step S52, resolution conversion processing is performed on the input image 1 inputted in Step S51 to thereby change the resolution of the input image 1. Then, in step S53, the basic size MB is extracted from the input image 1 changed in resolution.

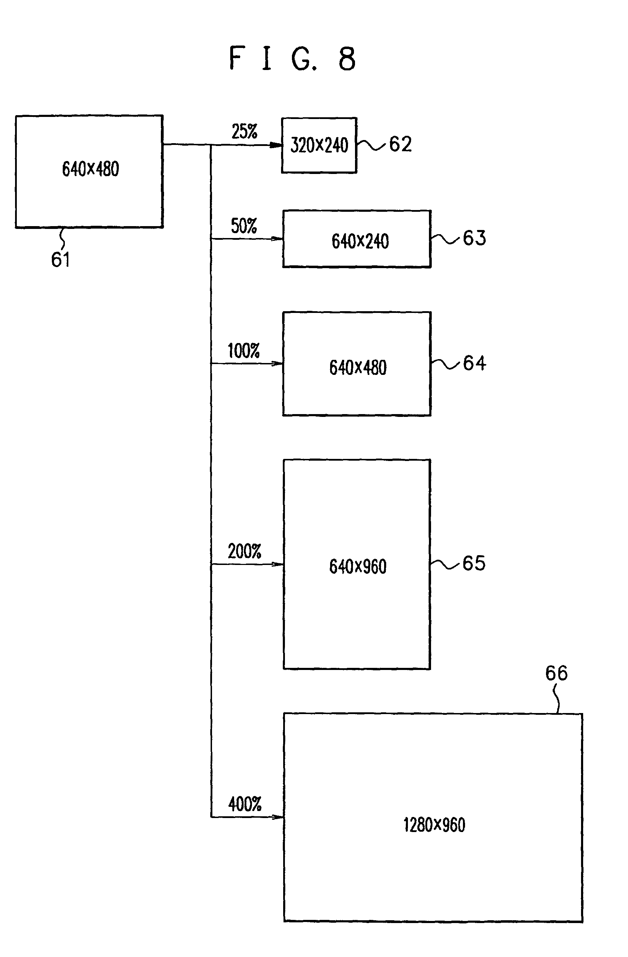

Next, referring to Fig. 8, the resolution conversion processing in step S52 will be described in detail.

Fig. 8 is a schematic view for explaining the resolution conversion processing method.

Note that the following description will be made assuming that an input image 61 constituted of 640 pixels × 480 pixels is inputted in the step S51 shown in Fig. 7.

In the step S51, when the input image 61 is inputted, the resolution of the input image 61 is changed in accordance with the preset change rate of the resolution in step S52. For example, when the change rate of the resolution is 25%, the input image 61 is changed in resolution in the vertical direction and the horizontal direction to 1/2 respectively to be converted into an image 62 constituted of 320 pixels × 240 pixels.

Next, in step S53, for example, a 16-pixel × 16-pixel basic size MB is extracted from the image 62 after the resolution conversion obtained in the step S52 and is subjected to the processing in step S54 to step S61 in sequence as in the first embodiment.

Alternatively, as another example of the change rate of the resolution, when the change rate of the resolution is 50%, the input image 61 is changed in resolution in the vertical direction to 1/2 and in resolution in the horizontal direction to 1/1, whereby an image 63 constituted of 640 pixels × 240 pixels can be obtained.

Further, when the change rate of the resolution is 100%, an image 64 constituted of 640 pixels × 480 pixels that is the input image 61 itself can be obtained, and when the change rate of the resolution is 200%, the input image 61 is changed in resolution in the vertical direction to 2/1 and in resolution in the horizontal direction to 1/1, whereby an image 65 constituted of 640 pixels × 960 pixels can be obtained.

Similarly, when the change rate of the resolution is 400%, the input image 61 is changed in resolution in the vertical direction to 2/1 and in resolution in the horizontal direction to 2/1, whereby an image 66 constituted of 1280 pixels × 960 pixels can be obtained.

It should be noted that, in the resolution conversion processing on the input image 61 in step S52, if the resolution is decreased in accordance with the preset change rate of the resolution, the resolution of the input image 61 is converted by calculating an average value of a pixel value of an interest pixel and pixel values of pixels lying near there and taking the calculation result as a central value. On the other hand, if the resolution is increased, the resolution of the input image 61 is converted by performing, for example, interpolation processing on adjacent pixels in the input image 61.

Further, not limited to the above-described resolution conversion processing, pixels may be thinned in accordance with the change rate of the resolution to thereby convert the resolution of the input image 61. Further, it is also adoptable to use the linear interpolation method in which the pixel value of the interest pixel is obtained using the ratio of distances between an interest pixel and adjacent pixels, thereby converting the resolution of the input image 61.

Furthermore, while the cases of the change rates of the resolution of 25%, 50%, 100%, 200%, and 400% are shown here, any other change rates, if set, will exert no influence on the effect of the present invention. Further, in the case of the change rate of the resolution of 50%, the example in which the resolution in the vertical direction of the image is changed to 1/2 is shown, but not the resolution in the vertical direction but the resolution in the horizontal direction may be changed to 1/2, presenting no problem. Similarly, for the other change rates of the resolution, the directions in which the resolution is changed can be set arbitrarily. Moreover, the resolution of the input image 61 is 640 pixels × 480 pixels here, but it is needless to say that other pixel sizes and resolutions present no problem.

In addition, such a case is shown in Fig. 8 that the resolution conversion processing is performed on the entire input image 61 in accordance with the set change rate of the resolution in step S52 in Fig. 7 and thereafter, for example, the 16-pixel × 16-pixel basic size MB is extracted in step S53, but it is also adoptable to extract a macroblock corresponding to the basic size MB from the input image 61 and perform the resolution conversion processing on the extracted macroblock in accordance with the set change rate of the resolution.

For example, it is also adoptable that in the case of the change rate of the resolution of 25%, a 32-pixel × 32-pixel macroblock is extracted from the input image 61, and the extracted macroblock is changed in size in the vertical direction and the horizontal direction to 1/2 to be converted into the 16-pixel × 16-pixel basic size MB, which is subjected to the processing in step S54 to step S61. As for this processing, it is needless to say that the same processing can be performed on any other change rates of the resolution.

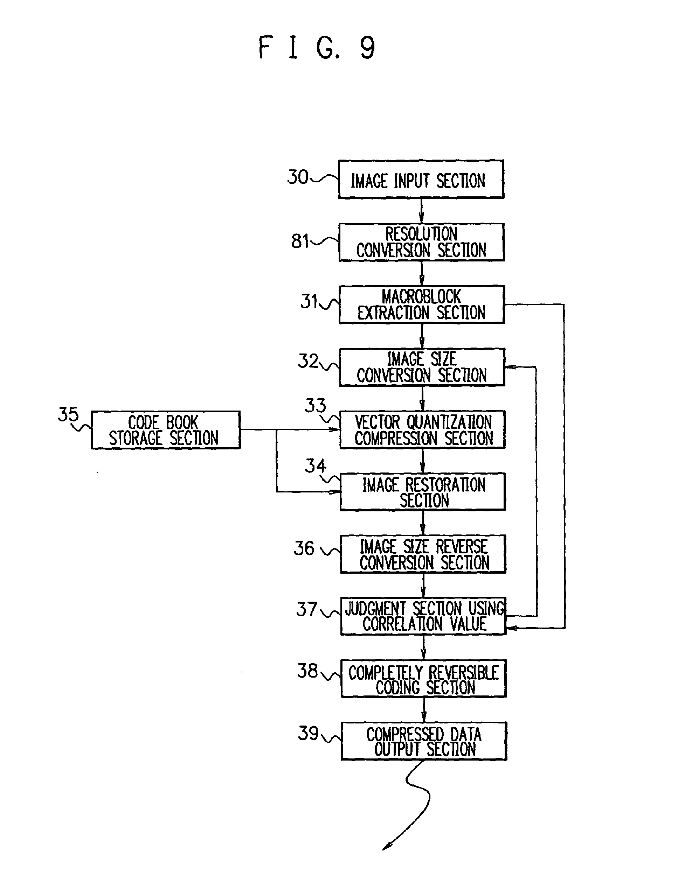

Next, referring to Fig. 9, a configuration of an image data compression apparatus which realizes the image data compression method according to the second embodiment will be described. Fig. 9 is a block diagram showing a configuration example of the image data compression apparatus according to the second embodiment.

Note that, in Fig. 9, the same numerals are assigned to blocks having the same functions as those shown in Fig. 4, and the overlapped description thereof will be omitted.

In Fig. 9, a numeral 81 denotes a resolution conversion section which performs the resolution conversion processing on the input image 61 inputted into an image input section 30 in accordance with the preset change rate of the resolution as shown in Fig. 8. The resolution conversion section 81 then supplies a macroblock extraction section 31 with an image converted into a desired resolution by performing the resolution conversion processing on the input image 61.

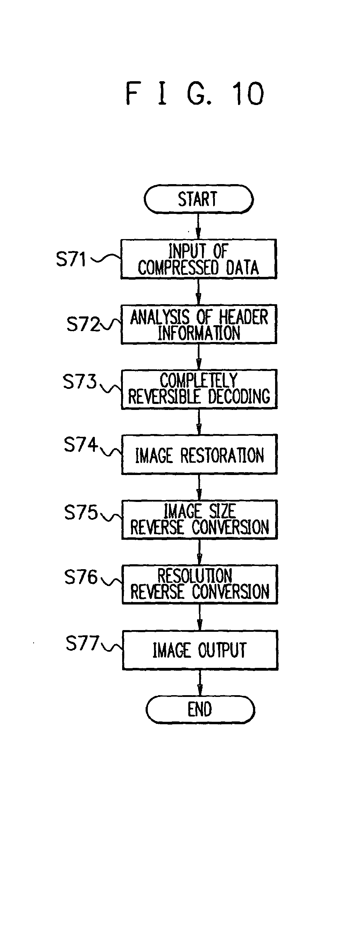

Next, referring to Fig. 10, an expansion method of data when data compression is performed by the image data compression method according to the second embodiment will be described.

Fig. 10 is a flowchart showing a procedure of a data expansion method. In Fig. 10, step S71 to step S75 and step S77 correspond to step S40 to step S44 and step 45 in the above-described data expansion method of the image data compression method according to the first embodiment respectively and perform the same processing, and thus description thereof will be omitted, and only step S76 which is different from the processing in the first embodiment will be described.

In step S76, enlargement processing or reduction processing of the restored image obtained in step S75 is performed in accordance with the change rate of the resolution of the input image preset in step S52 shown in Fig. 7. For example, in step S52, when the preset change rate of the resolution is 25%, the restored image restored by the processing up to step S75 is doubled in size in the vertical direction and the horizontal direction respectively in step S76, whereby a restored image having the same size as the original input image 61 can be obtained.

Further, in step S52, when the set change rate of the resolution is 400%, the restored image restored by the processing up to step S75 is changed in size in the vertical direction and the horizontal direction to 1/2 respectively in step S76, whereby a restored image having the same size as the original input image 61 can be obtained. In this manner, the enlargement processing or the reduction processing of the restored image is performed in step S76 in accordance with the change rate of the resolution set in step S52 during the image compression, whereby the image can be restored properly. Further, the restored image restored in step S76 can be outputted to an external part as a restored image in the next step S77.

As has been descried, according to the second embodiment of the present invention, the resolution of the input image 61 is changed in accordance with the preset change rate of the resolution, and then the input image 61 is subjected to the image size conversion processing and the compression processing by the vector quantization as in the first embodiment, whereby a further improvement in the compression ratio can be achieved for an image having many low frequency components with the image quality of its restored image being maintained. On the other hand, for an image having many high frequency components and an image and an application requiring high quality in the restored image, the value given as the change rate of the resolution is changed, whereby a further improvement in quality can be achieved.

Note that while the examples of the conversion rates of the resolution of 25%, 50%, 100%, 200%, and 400% are shown in the second embodiment, the rate is not limited to these. Further, the example of 16 pixels × 16 pixels is shown as the size of the basic size MB, but the size of the basic size MB can be arbitrarily set, and thus it is not limited to this.

Note that the vector quantization is used as the method of dividing and compressing the input image in the first and second embodiments, but the present invention is not limited to this and is applicable to a method of dividing the input image into a plurality of sizes and compressing them.

### (Third Embodiment)

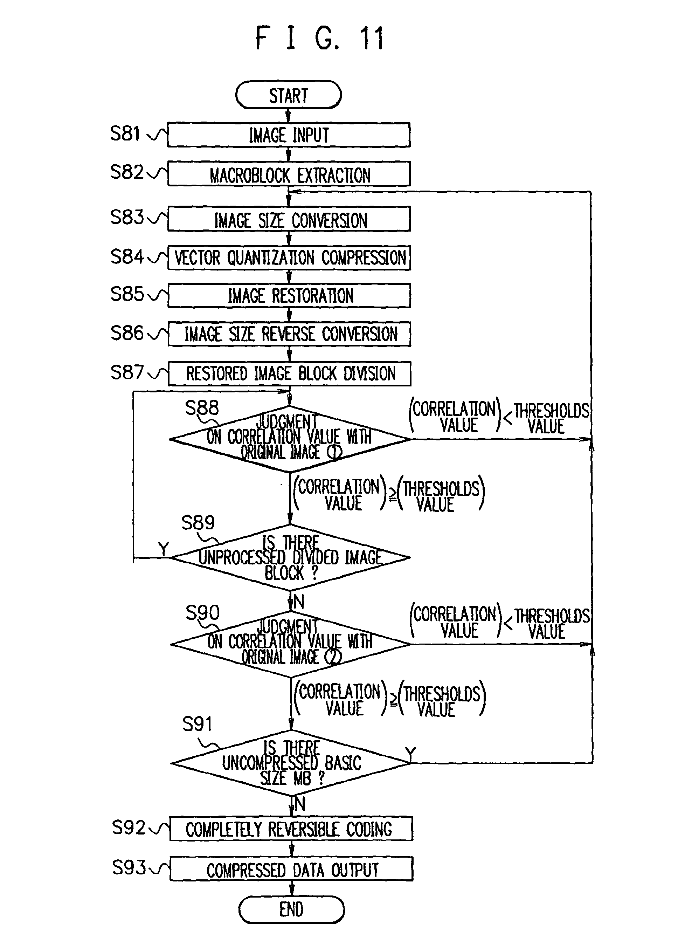

Referring to Fig. 11 to Fig. 13, a third embodiment of the present invention will be described. In the first and second embodiments, whether the reduction ratio at which the basic size MB is reduced is changed or not, that is, whether the image size conversion processing is further performed or not is judged based on the correlation value over the entire image between the restored image and the image of the basic size MB corresponding to the restored image. In the first and second embodiments, however, a quantization error is dispersed in performing the enlargement processing in the image size reverse conversion processing, which might cause deterioration in the image quality of the restored image.

Hence, the third embodiment is configured such that whether the reduction ratio at which the basic size MB is reduced is changed or not is judged based on a correlation value between an image block generated by dividing the restores image in a predetermined size (cutout in a predetermined size from the restored image) and an original image corresponding to the image block, in addition to the correlation value over the entire image between the restores image and the image of the basic size MB corresponding to the restored image, respectively.

Fig. 11 is a flowchart showing a processing procedure of an image data compression method according to the third embodiment.

Note that in Fig. 11, step S81 to step S86 and step S90 to step S93 correspond to step S1 to step S6 and step S7 to step S10 in the image data compression method according to the first embodiment respectively and perform the same processing as that in the image data compression method according to the first embodiment, and thus description thereof will be omitted. Note that step S90 in Fig. 11 is expressed as "judgment on correlation value with original image ②" for convenience of description.

In the third embodiment, in step S87, the restored image obtained by the image size reverse conversion processing in step S86, that is, the restored image of the same size as the basic size MB is divided into image blocks for comparison of a predetermined size (restored image block division processing).

Next, in step S88, a correlation value between the image block divided in the step S87 and the original image corresponding to the image block is calculated to judge whether or not the calculated correlation value is equal to or larger than a preset threshold value. As a result of the judgment, if the correlation value is smaller than the predetermined threshold value, the flow returns to the image size conversion processing in step S3, and if the correlation value is equal to or larger than the predetermined threshold value, the flow proceeds to step S89. The processing in step S88 is called "first correlation value judgment processing."

In step S89, whether or not there is an image block which has not been subjected to the first correlation value judgment processing in the step S88 among the image blocks divided in the step S87 is judged. In other words, in step S89, whether or not the first correlation value judgment processing in step S88 has been performed on all of the image blocks divided in the step S87 is judged. As a result of the judgment, if there is an image block which has not been subjected to the first correlation value judgment processing, the flow returns to step S88, and otherwise proceeds to step S90.

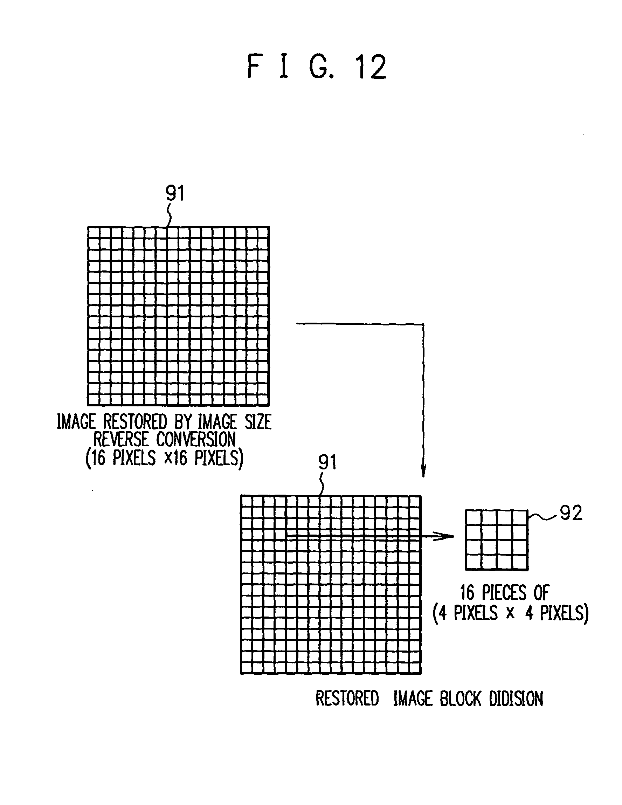

Next, referring to Fig. 12, the restored image block division processing in the step S87 and the first correlation value judgment processing in step S88 will be described in detail.

Fig. 12 is a schematic view for explaining the restored image block division processing and first correlation value judgment processing. It should be noted that description will be made assuming that a restored image 91 constituted of 16 pixels × 16 pixels, that is, the restored image corresponding to the 16-pixel × 16-pixel basic size MB is obtained in step S86 shown in Fig. 11.

In step S87, when the restored image 91 obtained by the image size reverse conversion processing in step S86 is inputted, the restored image 91 is divided into image blocks of a preset size. Here, an image block 92 constituted of 4 pixels × 4 pixels is extracted from the 16-pixel × 16-pixel restores image 91, and the restored image 91 is divided into 16 image blocks 92.

Next, in step S88, the correlation value between the image block 92 divided in the step S87 and the original image corresponding to the image block (for example, the S/N ratio) is calculated, and the calculated correlation value is compared with the preset threshold value. As a result of the comparison, if the calculated correlation value is smaller than the threshold value, the flow returns to step S83, and the processing in step S83 to step S87 is performed. On the other hand, the calculated correlation value is equal to or larger than the threshold value, the flow proceeds to step S89.

Then, the above-described processing is repeatedly performed on the other divided image blocks. If the calculated correlation values are equal to or larger than the threshold value in all of the image blocks, the flow proceeds to step S90, in which the correlation value judgment is performed based on the correlation value over the entire image between the restored image and the image of the basic size MB corresponding to the restored image, and the following processing is then performed.

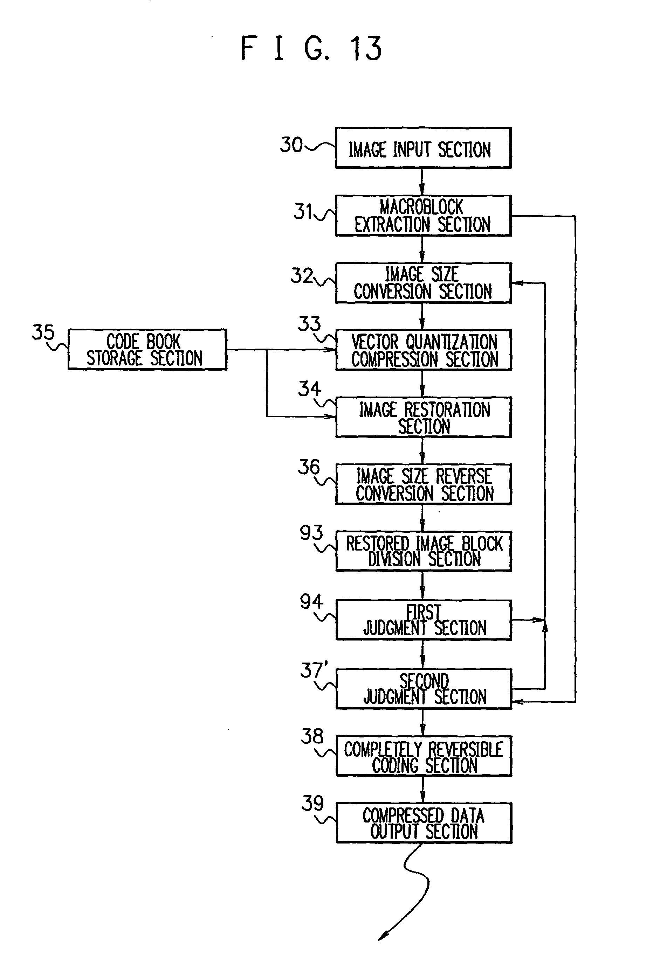

Next, referring to Fig. 13, a configuration of an image data compression apparatus which realizes the image data compression method according to the third embodiment will be described. Fig. 13 is a block diagram showing a configuration example of the image data compression apparatus according to the third embodiment.

Note that in Fig. 13, the same numerals are assigned to blocks having the same functions as those in Fig. 4, and the overlapped description thereof will be omitted.

In Fig. 13, a numeral 93 denotes a restored image block division section which divides the restored image generated by an image size reverse conversion section 36 into image blocks of a preset size (pixel size) as shown in Fig. 12.

A numeral 94 denotes a first judgment section which calculates a correlation value between the image block of the restored image obtained by the division in the restored image block division section 93 and the original image corresponding to the image block. Further, the first judgment section 94 compares the calculated correlation value with the preset threshold value and instructs the image size conversion section 32 or the like to further change the image size or not. Further, if the all of the image blocks obtained by dividing the restored image satisfy the preset threshold value, the first judgment section 94 instructs a second judgment section 37' to calculate the correlation value over the entire image between the restored image and the image of the basic size MB corresponding to the restores image to perform judgment. Note that the second judgment section 37' is the same as the judgment section 37 shown in the Fig. 4, and thus overlapped description thereof will be omitted.

Note that an expansion method of data when the image data compression is performed by the image data compression method according to the third embodiment is the same as that in the first embodiment, and thus description thereof will be described.

As has been described, according to the third embodiment, the same effect as that obtained in the first embodiment can be obtained, and whether the reduction ratio at which the basic size MB is reduced is changed or not is judged based on the correlation value between the image block obtained by dividing the restored image in a predetermined size and the original image corresponding to the image block, in addition to the correlation value over the entire image between the restored image and the image of the basic size MB corresponding to the restored image.

Accordingly, the image quality deterioration of the restored image due to the quantization error caused by the compression processing, particularly the image quality deterioration of the restored image which might be caused by dispersion of the quantization error due to the image size reverse conversion processing can be judged in detail based on the correlation value over the entire image between the restored image and the image of the basic size MB corresponding to the restored image and the correlation value between the image block of the restored image and the original image corresponding to the image block. This accordingly makes it possible to restrain the image quality deterioration of the restored image to enable compression processing at an appropriate reduction ratio, and to achieve a further improvement in the image quality.

Further, if even one correlation value between the image block obtained by dividing the restored image and the original image corresponding to the image block does not satisfy the threshold value condition, then at the point in time when the image block which does not satisfy the threshold value condition is verified, the following processing can be omitted, so that the processing can be performed efficiently.

It should be noted that while the size of the divided image block is set to 4 pixels × 4 pixels in the third embodiment, it is needless to say that employment of any other pixel size presents no problem. Similarly, while the size of the restored image (size of the basic size MB) is set to 16 pixels × 16 pixels, it is needless to say that employment of any other pixel size presents no problem. Further, the compression object MB generated by reducing and dividing the basic size MB is similarly not limited to 4 pixels × 4 pixels, 2 pixels × 2 pixels, or 1 pixel × 1 pixel.

Further, square macroblocks each constituted of the same number of pixels in the vertical direction and the horizontal direction are used as the basic size MB and the compression object MB in the third embodiment but, not limited to square macroblocks, rectangular macroblocks may be also used. For example, a 4-pixel × 5-pixel rectangular macroblock may be used as the compression object MB. In addition, it is not necessary to decide the reduction ratio to be an integral multiple of the size of the compression object MB such as 1/4, 1/2, or the like as the reduction ratio of the basic size MB, and a macroblock of any size can be set.

Further, if the size of the restored image obtained by the image size reverse conversion processing (size of the basic size MB) is smaller than the size of the image block extracted and divided in the restored image block division processing, a plurality of the restored images (a plurality of basic size MBs) obtained by the image size reverse conversion processing are combined to generate an image block.

Further, the restored image is divided into image blocks and judged, and then judgment is performed based on the correlation value over the entire image between the restored image and the image of the basic size MB corresponding to the restored image in the third embodiment, but it is needless to say that the order of these two kinds of processing may be arbitrarily set, and therefore the same effect can be obtained even when either processing is performed first.

Further, after the compression processing by the vector quantization is performed on the all of the compression object MBs constituting the basic size MB, judgment on the image quality of the restored image is performed based on the correlation value over the entire image between the restored image and the image of the basic size MB corresponding to the restored image and the correlation value between the image block obtained by dividing the restored image in the predetermined size and the original image corresponding to the image block in the third embodiment, it is also adoptable that every time the compression processing by the vector quantization is performed on one compression object MB, judgment on the image quality of the restored image is performed based on the correlation value between the restored image of a part which has been subjected to the compression processing until then and the image of the basic size MB of a part corresponding thereto and the correlation value between the image block obtained by dividing the restored image of a part which has been subjected to the compression processing until then and the original image corresponding to the image block. This makes it possible that when the image quality deterioration of the restored image is large, no compression processing is performed on residual compression object MBs which have not been subjected to the compression processing by the vector quantization, and the reduction ratio at which the basic size MB is reduced can be changed, leading to speedy compression processing of the input image.

Further, the S/N ratio is shown as the correlation value between the restored image restored after the compression processing by the vector quantization and the image of the basic size MB corresponding to the restored image and the correlation value between the image block obtained by dividing the restored image in the predetermined size and the original image corresponding to the image block in the third embodiment, the present invention may use, not limited to the S/N ratio, any index, presenting no problem as long as it indicates the correlation between the restored image and the original image, and, for example, the differential absolute distance or the mean square error may be used as the correlation value. However, when the differential absolute distance or the mean square error is used as the correlation value, it is configured that if the correlation value is larger than the threshold value in the step S88 and step 90 in Fig. 11, the flow returns to step S83 in Fig. 11, and if the correlation value is equal to or smaller than the threshold value, the flow proceeds to step S89 and step S91 in Fig. 11, respectively.

Further, when the basic size MB is extracted, the extraction is performed with no processing performed on the input image inputted in the third embodiment, but a basic size MB may be extracted after resolution conversion processing is performed on an input image.

Further, it is also adoptable that as an index indicating the correlation between the restored image and the original image, a histogram of the correlation value is obtained, and based on its distribution whether the image size is changed or not is decided.

### (Other Embodiments)

Each of the above-described functional blocks and processing means shown in the various embodiments may be constituted of hardware, or may be constituted of a microcomputer system composed of CPU or MPU, ROM, RAM and so on, so that its operation may be realized in accordance with an operation program stored in the ROM or RAM. Further, a configuration implemented by supplying a program for software for realizing the function to RAM and operating each of the above-described functional blocks in accordance with the program to realize each of the above-described functional blocks is also included within the scope of the present invention.

In this case, the above-described software program itself will realize the function of each of the above-described embodiments, and therefore the program itself and means for supplying the program to a computer, such as a recording medium storing the program constitute the present invention. Usable recording medium recording the program thereon is, for example, a flexible disk, hard disk, optical disk, magnetic optical disk, CD-ROM, CD-I, CD-RW, DVD, zip, magnetic tape, a non-volatile memory card, or the like besides the aforementioned ROM or RAM.

Further, it is needless to say that even in a case where a computer carries out a supplied program, whereby not only the function in the above-described embodiments is realized, but also the program collaborates with OS (operating system) or other application software, or the like operating in the computer to realize the functions of the above-described embodiments, the program is also included in the embodiments of the present invention.

Further, it is also needless to say that even in a case where the supplied program is stored in a memory included in a function expansion board of the computer or a function expansion unit connected to the computer, and thereafter the CPU included in the function expansion board or the function expansion unit carries out a part or all of the actual processing based on the instruction of the program, the processing realizing the above-described function of the embodiments, the program is also included in the present invention.

### Industrial Applicability

As has been described, according to the present invention, by performing predetermined processing on input image data inputted in an m-pixel × n-pixel image block to change the size of the image block, obtaining the strength of correlation between m-pixel × n-pixel restored image data generated by performing expansion processing on compression image data obtained by performing compression processing on the image data in the changed image block and the m-pixel × n-pixel input image data, and changing the method of changing the size of the image block based on the obtained strength of the correlation, the size of the image block suitable for the compression processing can easily be decided, and the compression processing can be performed on the image data of the input image at a high compression ratio while keeping the high image quality of the restored image.

Further, when the method of changing the size of the image block is changed based on the strength of correlation between the image data of a divided image block of a predetermined size generated based on the restored image and a part of the input image data corresponding to the divided image block, in addition to the strength of correlation between the m-pixel × n-pixel restored image data and the m-pixel × n-pixel input image data, the image quality deterioration of the restored image due to the quantization error caused by the compression processing, particularly the image quality deterioration of the restored image which might be caused by dispersion of the quantization error in the expansion processing can be judged in detail, and a further improvement in the image quality can be achieved.

Further, when the compression-processed image data is subjected to the completely reversible coding processing by a plurality of completely reversible coding methods, and a completely reversible coding method having a smaller data amount after the completely reversible coding processing is selected, the image data of the input image can be compression-processed at a higher compression ratio.

## Claims

1. An image data compression apparatus, comprising:
an image size conversion means for performing predetermined processing on input image data inputted in an image block of m pixels × n pixels (where m and n are natural numbers) to change a size of the image block;
a compression means for compressing image data in the image block changed in size by said image size conversion means;
an expansion means for expanding compressed image data compressed by said compression means to generate restored image data in the m-pixel × n-pixel image block;
a first correlation calculation means for obtaining a strength of a correlation between the restored image data generated by said expansion means and the input image data; and
a judgment means for judging whether or not the size of the image block is further changed by said image size conversion means based on the strength of a first correlation outputted from said correlation calculation means.

2. An image data compression apparatus, comprising:
an image size conversion means for performing predetermined processing on input image data inputted in an image block of m pixels × n pixels (where m and n are natural numbers) to change a size of the image block;
a compression means for compressing image data in the image block changed in size by said image size conversion means;
an expansion means for expanding compressed image data compressed by said compression means to generate restored image data in the m-pixel × n-pixel image block;
a first correlation calculation means for obtaining a strength of a correlation between the restored image data generated by said expansion means and the input image data;
a second correlation calculation means for generating image data in a divided image block of a predetermined size based on the restored image data generated by said expansion means and obtaining a strength of a correlation between the generated image data in the divided image block and a part of the input image data corresponding to the divided image block; and
a judgment means for judging whether or not the size of the image block is further changed by said image size conversion means based on the strength of a first correlation outputted from said first correlation calculation means and the strength of a second correlation outputted from said second correlation calculation means.

3. The image data compression apparatus according to claim 2, wherein said second correlation calculation means cuts out image data in a divided image block of m' pixels × n' pixels (where m' and n' are natural numbers and m' ≦ m, n' ≦ n) from the restored image data generated by said expansion means and obtains a strength of a correlation between the cutout image data in the divided image block and a part of the input image data corresponding to the divided image block.

4. The image data compression apparatus according to claim 2, wherein said second correlation calculation means combines the restored image data generated by said expansion means to generate image data in a divided image block of m' pixels × n' pixels (where m' and n' are natural numbers and m' > m, n' > n) and obtains a strength of a correlation between the generated image data in the divided image block and the input image data combined to correspond to the divided image block.

5. The image data compression apparatus according to claim 1, further comprising an image block extraction means for extracting image data to be compressed being a compression object in a unit of the m-pixel × n-pixel image block and inputting the extracted image data to be compressed as the input image data.

6. The image data compression apparatus according to claim 5, further comprising a completely reversible coding means for performing completely reversible coding processing on compressed image data respectively corresponding to all the input image data compressed by said compression means when said judgment means judges that further change in size of the image block by said image size conversion means is not performed on all the input image data inputted from said image block extraction means.

7. The image data compression apparatus according to claim 6, wherein said completely reversible coding means performs completely reversible coding processing, by a plurality of completely reversible coding methods, on the compressed image data respectively corresponding to all the input image data compressed by said compression means,
said apparatus further comprising a completely reversible coding method selection means for comparing the compressed image data which have been subjected to the completely reversible coding processing by the plurality of completely reversible coding methods by said completely reversible coding means, and selecting a completely reversible coding method having a smallest data amount of the compressed image data which has been subjected to the completely reversible coding processing.

8. The image data compression apparatus according to claim 5, further comprising a resolution conversion means for converting a resolution of the image data to be compressed at a predetermined resolution change rate and supplying the resolution to said image block extraction means.

9. The image data compression apparatus according to claim 1, wherein the strength of the correlation is a correlation value between each pixel value of image data relating to a restored image based on the restored image data generated by said expansion means and each pixel value of the input image data corresponding to the image data.

10. The image data compression apparatus according to claim 9, wherein the correlation value is an S/N ratio between each pixel value of the image data relating to the restored image and each pixel value of the input image data corresponding to the image data.

11. The image data compression apparatus according to claim 9, wherein the correlation value is a mean square error between each pixel value of the image data relating to the restored image and each pixel value of the input image data corresponding to the image data.

12. The image data compression apparatus according to claim 9, wherein the correlation value is a differential absolute distance between each pixel value of the image data relating to the restored image and each pixel value of the input image data corresponding to the image data.

13. The image data compression apparatus according to claim 10, wherein said judgment means judges that the size of the image block is further changed by said image size conversion means when the correlation value is smaller than a predetermined threshold value.

14. The image data compression apparatus according to claim 11, wherein said judgment means judges that the size of the image block is further changed by said image size conversion means when the correlation value is larger than a predetermined threshold value.

15. The image data compression apparatus according to claim 12, wherein said judgment means judges that the size of the image block is further changed by said image size conversion means when the correlation value is larger than a predetermined threshold value.

16. The image data compression apparatus according to claim 1, wherein said compression means and said expansion means perform compression and expansion by vector quantization using a code book method respectively.

17. The image data compression apparatus according to claim 16, wherein patterns of an image block of a pixels × b pixels (where a and b are natural numbers) in the code book are arranged such that patterns with a smallest mean square error have adjacent addresses.

18. The image data compression apparatus according to claim 16, wherein patterns of an image block of a pixels × b pixels (where a and b are natural numbers) in the code book are arranged such that patterns with a smallest differential absolute distance have adjacent addresses.

19. The image data compression apparatus according to claim 16, wherein patterns of an image block of a pixels × b pixels (where a and b are natural numbers) in the code book are arranged adjacent under a predetermined rule, and a predetermined number of patterns having element values in the a-pixel × b-pixel image block which are all same are further arranged at adjacent addresses prior or subsequent to addresses at which the patterns of the image pattern are arranged under the predetermined rule.

20. An image data compression apparatus, comprising:
a compression means for compressing input image data inputted by a predetermined compression method;
a completely reversible coding means for performing completely reversible coding processing, by a plurality of completely reversible coding methods, on compressed image data obtained by compressing the input image data by said compression means; and
a completely reversible coding method selection means for comparing the compressed image data which have been subjected to the completely reversible coding processing by said completely reversible coding means, and selecting a completely reversible coding method having a smallest data amount of the compressed image data which has been subjected to the completely reversible coding processing.

21. The image data compression apparatus according to claim 20, wherein said compression means compresses the input image data by vector quantization using a code book method.

22. The image data compression apparatus according to claim 21, wherein patterns of an image block of a pixels × b pixels (where a and b are natural numbers) in the code book are arranged such that patterns with a smallest mean square error have adjacent addresses.

23. The image data compression apparatus according to claim 21, wherein patterns of an image block of a pixels × b pixels (where a and b are natural numbers) in the code book are arranged such that patterns with a smallest differential absolute distance have adjacent addresses.

24. The image data compression apparatus according to claim 21, wherein patterns of an image block of a pixels × b pixels (where a and b are natural numbers) in the code book are arranged adjacent under a predetermined rule, and a predetermined number of patterns having element values in the a-pixel × b-pixel image block which are all same are further arranged at adjacent addresses prior or subsequent to addresses at which the patterns of the image pattern are arranged under the predetermined rule.

25. An image data compression method, comprising: performing predetermined processing on input image data inputted in an image block of m pixels × n pixels (where m and n are natural numbers) to change a size of the image block; compression-processing image data in the image block changed in size; expansion-processing compressed image data obtained by the compression processing to generate restored image data in the m-pixel × n-pixel image block; obtaining a first correlation strength indicating a strength of a correlation between the generated restored image data and the input image data; and judging whether or not the size of the image block is further changed based on the first correlation strength.

26. An image data compression method, comprising: performing predetermined processing on input image data inputted in an image block of m pixels × n pixels (where m and n are natural numbers) to change a size of the image block; compression-processing image data in the image block changed in size; expansion-processing compressed image data obtained by the compression processing to generate restored image data in the m-pixel × n-pixel image block; obtaining a first correlation strength indicating a strength of a correlation between the generated restored image data and the input image data; generating image data in a divided image block of a predetermined size based on the generated restored image data; obtaining a second correlation strength indicating a strength of a correlation between the generated image data in the divided image block and a part of the input image data corresponding to the divided image block; and judging whether or not the size of the image block is further changed based on the first correlation strength and the second correlation strength.

27. The image data compression method according to claim 26, wherein image data in a divided image block of m' pixels × n' pixels (where m' and n' are natural numbers and m' ≦ m, n' ≦ n) is cut out from the generated restored image data, and a strength of a correlation between the cutout image data in the divided image block and a part of the input image data corresponding to the divided image block is obtained as the second correlation strength.

28. The image data compression method according to claim 26, wherein the generated restored image data are combined to generate image data in a divided image block of m' pixels × n' pixels (where m' and n' are natural numbers and m' > m, n' > n), and a strength of a correlation between the generated image data in the divided image block and the input image data combined to correspond to the divided image block is obtained as the second correlation strength.

29. The image data compression method according to claim 25, further comprising: extracting image data to be compressed being a compression object in a unit of the m-pixel × n-pixel image block and inputting the extracted image data to be compressed as the input image data; and performing completely reversible coding processing on compressed image data respectively corresponding to all the input image data obtained by the compression processing when it is judged that further change in size of the image block is not performed on all the input image data inputted.

30. The image data compression method according to claim 29, further comprising: performing completely reversible coding processing, by a plurality of completely reversible coding methods, on the compressed image data respectively corresponding to all the input image data obtained by the compression processing; and selecting a completely reversible coding method having a smallest data amount of the compressed image data which have been subjected to the completely reversible coding processing by the plurality of completely reversible coding methods.

31. The image data compression method according to claim 25, further comprising converting a resolution of image data to be compressed being a compression object at a predetermined resolution change rate, extracting image data to be compressed converted in resolution in a unit of the m-pixel × n-pixel image block, and inputting the extracted image data to be compressed as the input image data.

32. The image data compression method according to claim 25, wherein the strength of the correlation is a correlation value between each pixel value of image data relating to a restored image based on the generated restored image data and each pixel value of the input image data corresponding to the image data.

33. The image data compression method according to claim 32, wherein the correlation value is any of an S/N ratio, a mean square error, and a differential absolute distance between each pixel value of the image data relating to the restored image and each pixel value of the input image data corresponding to the image data.

34. The image data compression method according to claim 25, wherein the compression processing and the expansion processing perform compression and expansion by vector quantization using a code book method respectively.

35. An image data compression method, comprising: compression-processing input image data inputted by a predetermined compression method; performing completely reversible coding processing, by a plurality of completely reversible coding methods, on compressed image data obtained by the compression processing; and selecting a completely reversible coding method having a smallest data amount of the compressed image data which has been subjected to the completely reversible coding processing.

36. The image data compression method according to claim 35, wherein the compression processing compresses the input image data by vector quantization using a code book method.

37. A computer readable recording medium on which a program product is recorded, said program product comprising:
a computer readable program code means for functioning as:
an image size conversion means for performing predetermined processing on input image data inputted in an image block of m pixels × n pixels (where m and n are natural numbers) to change a size of the image block;
a compression means for compressing image data in the image block changed in size by the image size conversion means;
an expansion means for expanding compressed image data compressed by the compression means to generate restored image data in the m-pixel × n-pixel image block;
a first correlation calculation means for obtaining a strength of a correlation between the restored image data generated by the expansion means and the input image data; and
a judgment means for judging whether or not the size of the image block is further changed by the image size conversion means based on the strength of a first correlation outputted from the correlation calculation means.

38. A computer readable recording medium on which a program is recorded, said program product comprising:
a computer readable program code means for performing predetermined processing on input image data inputted in an image block of m pixels × n pixels (where m and n are natural numbers) to change a size of the image block;
a computer readable program code means for compression-processing image data in the image block changed in size;
a computer readable program code means for expansion-processing compressed image data obtained by the compression processing to generate restored image data in the m-pixel × n-pixel image block;
a computer readable program code means for obtaining a first correlation strength indicating a strength of a correlation between the generated restored image data and the input image data; and
a computer readable program code means for judging whether or not the size of the image block is further changed based on the first correlation strength.

39. A computer program product comprising:
a computer readable program code means for functioning as:
an image size conversion means for performing predetermined processing on input image data inputted in an image block of m pixels × n pixels (where m and n are natural numbers) to change a size of the image block;
a compression means for compressing image data of the image block changed in size by the image size conversion means;
an expansion means for expanding compressed image data compressed by the compression means to generate restored image data in the m-pixel × n-pixel image block;
a first correlation calculation means for obtaining a strength of a correlation between the restored image data generated by the expansion means and the input image data; and
a judgment means for judging whether or not the size of the image block is further changed by the image size conversion means based on the strength of a first correlation outputted from the correlation calculation means.

40. A computer program product comprising:
a computer readable program code means for performing predetermined processing on input image data inputted in an image block of m pixels × n pixels (where m and n are natural numbers) to change a size of the image block;
a computer readable program code means for compression-processing image data in the image block changed in size;
a computer readable program code means for expansion-processing compressed image data obtained by the compression processing to generate restored image data in the m-pixel × n-pixel image block;
a computer readable program code means for obtaining a first correlation strength indicating a strength of a correlation between the generated restored image data and the input image data; and
a computer readable program code means for judging whether or not the size of the image block is further changed based on the first correlation strength.
